# FASCICULE DE BREVET EUROPEEN

(11) **EP 2 769 160 B1**
(45) Date de publication et mention de la délivrance du brevet: **19.06.2019**
(21) Numéro de dépôt: 12787782.7
(22) Date de dépôt: 19.10.2012
(51) Int. Cl.: F27B 14/06, F27B 19/00, C22B 9/00, C22B 9/16, C01B 33/037

(54) **INSTALLATION DE PURIFICATION D'UN MATERIAU**
ANLAGE ZUM REINIGEN EINES MATERIALS
FACILITY FOR PURIFYING A MATERIAL

(30) Priorité: 20.10.2011 FR 1159499
(43) Date de publication de la demande: 27.08.2014
(73) Titulaire: Francewafer, 38100 Grenoble (FR)
(72) Inventeur: DELAGE, Daniel, F-38610 Gieres (FR); LECOMTE, Guillaume, F-38350 Grenoble (FR)
(74) Mandataire: Cabinet Beaumont
(86) Numéro de dépôt international: PCT/FR2012/052397
(87) Numéro de publication internationale: WO 2013/057450

(56) Documents cités:
- EP-A1- 1 249 520
- FR-A1- 2 831 881
- JP-A- 2002 029 727
- US-A1- 2004 056 026
- US-B1- 6 375 893
- YUGE N ET AL: "Purification of metallurgical-grade silicon up to solar grade", PROGRESS IN PHOTOVOLTAICS: RESEARCH AND APPLICATIONS, JOHN WILEY & SONS, LTD, vol. 9, no. 3, 1 mai 2001 (2001-05-01), pages 203-209, XP002203294, ISSN: 1062-7995, DOI: 10.1002/PIP.372

## Description

### Domaine de l'invention

La présente invention concerne la purification d'un matériau, par exemple un matériau semiconducteur, notamment la purification de silicium pour constituer des cellules de production d'énergie électrique par effet photovoltaïque.

### Exposé de l'art antérieur

Actuellement, la majorité du silicium destiné aux applications photovoltaïques est produite par des traitements chimiques similaires aux traitements utilisés pour la production du silicium destiné aux applications électroniques. Ces procédés chimiques sont bien maîtrisés mais demandent des investissements très lourds et conduisent à des coûts de production élevés.

La pression sur les coûts de l'énergie photovoltaïque a conduit à rechercher des procédés de purification alternatifs à la voie chimique, appelés procédés métallurgiques. Ces procédés consistent à appliquer à un silicium de qualité métallurgique, pouvant contenir jusqu'à 1 ou 2 % d'impuretés, différents traitements afin de réduire le taux d'impuretés. Même si les contraintes de pureté pour du silicium destiné aux applications photovoltaïques sont moins sévères que celles pour du silicium destiné aux applications électroniques, elles restent strictes, avec un niveau d'impureté global inférieur à quelques dizaines de ppm (partie par million). Les niveaux acceptables de bore et de phosphore sont particulièrement critiques et sont de quelques dixièmes de ppm.

Pour réduire la quantité de phosphore, une des méthodes possibles consiste à maintenir un bain de silicium liquide contenu dans un creuset sous une atmosphère à basse pression, de façon à obtenir l'évaporation du phosphore. La quantité de phosphore évaporé est d'autant plus élevée que la surface d'échange entre le silicium fondu et l'atmosphère à basse pression, également appelée surface libre du silicium fondu, est grande. Pour une surface d'échange donnée, la durée du procédé de purification est proportionnelle au volume de silicium contenu dans le creuset.

Toutefois, il existe un besoin d'un procédé de purification du silicium par évaporation sous une atmosphère à basse pression qui soit compatible avec une exploitation à une échelle industrielle, notamment un procédé de purification pouvant être réalisé à des coûts compétitifs.

Pour mettre en oeuvre le procédé de purification par évaporation à basse pression, une possibilité consiste à utiliser un creuset de grandes dimensions pour obtenir une grande surface d'échange entre le silicium fondu et l'atmosphère à basse pression tout en utilisant un creuset avec une hauteur réduite de façon à augmenter le rapport surface sur volume. Cette solution présente différents inconvénients : d'une part, la réalisation de tels creusets est difficile et onéreuse ; d'autre part, la structure d'un tel four de géométrie plate et donc très peu compacte est très défavorable sur le plan énergétique. En effet, les surfaces d'un tel four au niveau desquelles des échanges thermiques peuvent se produire sont élevées, ce qui conduit à des pertes thermiques importantes par rayonnement à la surface libre du silicium liquide à haute température et par conduction sur les parois du creuset.

Les documents EP1249520 et JP 2002-029727 décrivent des installations de purification d'un métal fondu comprenant plusieurs creusets assemblés en cascade.

### Résumé

La présente invention vise une installation de purification à basse pression d'un matériau, notamment un matériau semiconducteur tel que le silicium, qui permet la mise en oeuvre d'un procédé de purification compatible avec une exploitation à une échelle industrielle.

Selon un autre objet, l'installation de purification a une structure particulièrement simple et présente un encombrement réduit.

Selon un autre objet, l'installation de purification a, en fonctionnement, un rendement énergétique élevé.

Selon un autre objet, l'installation de purification a une productivité compatible avec une exploitation à une échelle industrielle.

Selon un autre objet, l'installation de purification permet, en outre, la production en continu ou en semi-continu du matériau semiconducteur purifié.

Pour atteindre tout ou partie de ces objets ainsi que d'autres, un mode de réalisation de la présente invention prévoit une installation de purification d'un matériau, comprenant une enceinte contenant :
- un ensemble de creusets, chaque creuset comportant une chambre destinée à contenir le matériau à l'état fondu et un conduit d'évacuation du matériau à l'état fondu hors de la chambre, l'ensemble comportant au moins des premier, deuxième et troisième creusets, le premier creuset étant au moins en partie à l'aplomb du deuxième creuset et étant en contact avec le deuxième creuset, le conduit d'évacuation du premier creuset débouchant dans le deuxième creuset, et le deuxième creuset étant au moins en partie à l'aplomb du troisième creuset et étant en contact avec le troisième creuset, le conduit d'évacuation du deuxième creuset débouchant dans le troisième creuset ;
- un système de chauffage entourant au moins en partie chaque creuset ; et
- un système de récupération du matériau à l'état fondu fourni par le conduit d'évacuation de l'un des creusets dudit ensemble;
- une cheminée attenante à l'ensemble de creusets, chaque creuset comprenant une conduite par l'intermédiaire de laquelle la chambre du creuset communique avec la cheminée;
- un pompe à vide reliée à la cheminée.

Selon un mode de réalisation de la présente invention, la chambre de chaque creuset est conformée pour que le rapport entre la racine carrée de la surface libre du matériau à l'état fondu dans la chambre et la hauteur du matériau à l'état fondu dans la chambre soit supérieur ou égal à cinq.

Selon un mode de réalisation de la présente invention, l'installation de purification comprend un système de fourniture du matériau, à l'état solide ou à l'état fondu, à l'un des creusets dudit ensemble.

Selon un mode de réalisation de la présente invention, le premier creuset recouvre au moins 75 %, de préférence au moins 80 %, plus préférentiellement au moins 90 %, en particulier 100 %, du deuxième creuset et le deuxième creuset recouvre au moins 75 %, de préférence au moins 80 %, plus préférentiellement au moins 90 %, en particulier 100 %, du troisième creuset.

Selon un mode de réalisation de la présente invention, les creusets sont au moins en partie empilés selon une direction d'empilement, et le conduit d'évacuation du deuxième creuset est disposé de façon opposée aux conduits d'évacuation des premier et troisième creusets par rapport à la direction d'empilement.

Selon un mode de réalisation de la présente invention, la chambre de chaque creuset comprend un fond, et le conduit d'évacuation comprend une ouverture dans la chambre, le rapport entre la racine carrée de la section de la chambre dans un plan horizontal affleurant l'ouverture et la hauteur entre le fond et l'ouverture selon la direction verticale est supérieur ou égal à cinq.

Selon un mode de réalisation de la présente invention, l'ensemble de creusets comprend un quatrième creuset, le troisième creuset étant au moins en partie à l'aplomb du quatrième creuset, le conduit d'évacuation du troisième creuset débouchant dans le quatrième creuset.

Selon un mode de réalisation de la présente invention, l'enceinte contient une atmosphère à une pression inférieure ou égale à 100 Pa.

Selon un mode de réalisation de la présente invention, l'installation de purification comprend une cheminée attenante à l'ensemble de creusets et une pompe à vide reliée à la cheminée par une conduite, la chambre de chaque creuset communiquant avec la cheminée.

Selon un mode de réalisation de la présente invention, pour chaque creuset, la chambre comprend au moins deux faces opposées et, pour chaque creuset, le conduit d'évacuation comprend une ouverture traversante le long de l'une des faces.

Selon un mode de réalisation de la présente invention, pour chaque creuset, la chambre comprend un fond ayant une première portion plane horizontale se prolongeant, à deux extrémités opposées, par des deuxièmes portions planes inclinées par rapport à la première portion plane d'un angle inférieur ou égal à 20 degrés.

Selon un mode de réalisation de la présente invention, l'une des deuxièmes portions planes se prolonge par une troisième portion plane horizontale, l'ouverture s'étendant le long de la troisième portion plane.

Selon un mode de réalisation de la présente invention, le système de chauffage est inductif ou résistif.

Selon un mode de réalisation de la présente invention, l'enceinte comprend un four de fusion du matériau adapté à fournir le matériau à l'état fondu à l'ensemble de creusets.

Un autre mode de réalisation de la présente invention prévoit un procédé de purification d'un matériau comprenant au moins une impureté, utilisant une installation de purification décrite précédemment, comprenant les étapes suivantes :
- verser le matériau à l'état fondu dans le premier creuset ;
- chauffer chaque creuset de façon que, à l'intérieur de l'empilement, la température varie de moins de 150 degrés par rapport à une température de fonctionnement ;
- amener le matériau à l'état fondu à s'écouler du premier creuset dans le deuxième creuset et du deuxième creuset dans le troisième creuset d'où il résulte une évaporation de l'impureté ; et
- récupérer le matériau à l'état fondu issu du troisième creuset.

Selon un mode de réalisation de la présente invention, le matériau est le silicium, et la température de fonctionnement varie de 1500°C à 1800°C.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une coupe schématique de face d'un premier exemple de réalisation d'une installation de purification d'un matériau selon l'invention ;
les figures 2 et 3 sont des coupes de l'empilement de creusets de l'installation de purification de la figure 1 selon deux plans verticaux et perpendiculaires ;
la figure 4 est une coupe de l'empilement de creusets de l'installation de purification de la figure 1 selon un plan horizontal ;
la figure 5 est une vue en perspective schématique de l'un des creusets des figures 2 à 4 ;
la figure 6 est une coupe schématique de face d'un second exemple de réalisation d'une installation de purification d'un matériau selon l'invention ;
les figures 7 et 8 sont des coupes de l'empilement de creusets de l'installation de purification de la figure 6 selon deux plans verticaux et perpendiculaires ;
la figure 9 est une coupe analogue à la figure 4 d'un troisième exemple de réalisation d'une installation de purification d'un matériau selon l'invention ; et
la figure 10 est une vue analogue à la figure 5 d'un creuset de l'installation de la figure 9.

### Description détaillée

De mêmes éléments ont été désignés par de mêmes références dans les différentes figures. Pour des raisons de clarté, seuls les éléments de l'installation qui sont nécessaires à la compréhension de l'invention ont été représentés dans les différentes figures. Dans la suite de la description, les qualificatifs "inférieur", "supérieur", "vers le haut" et "vers le bas" sont utilisés en relation avec un axe D, considéré comme étant vertical. Toutefois, il est clair que l'axe D peut être légèrement incliné par rapport à la verticale, par exemple d'un angle inférieur ou égal à 20°.

Un exemple d'installation de purification d'un matériau va maintenant être décrit pour la purification du silicium, notamment pour l'obtention de blocs de silicium présentant un degré de pureté suffisant pour une utilisation directe pour la réalisation de produits photovoltaïques. L'exemple d'installation de purification peut également être utilisée pour l'obtention de blocs de silicium ayant un degré de pureté inférieur au niveau requis pour une utilisation directe pour la réalisation de produits photovoltaïques et destinés à être traités ultérieurement pour présenter un degré de pureté suffisant pour la réalisation de produits photovoltaïques.

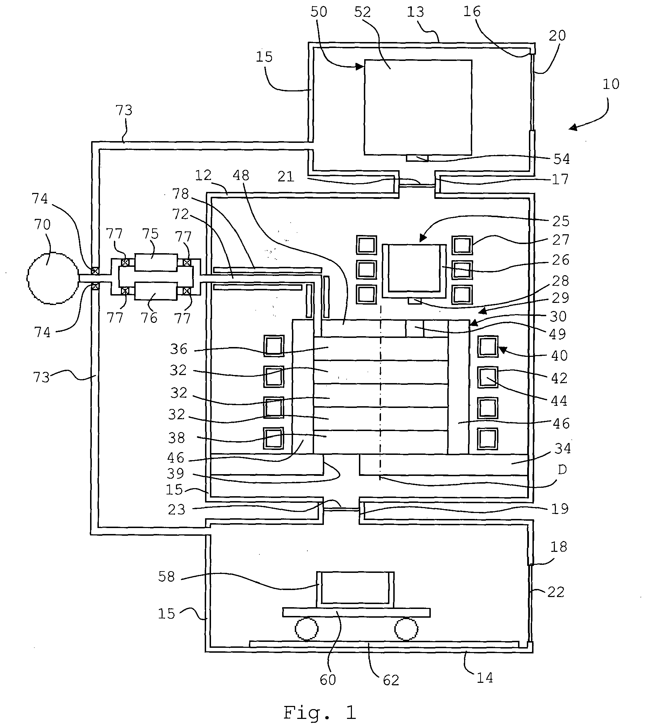

La figure 1 représente un premier exemple de réalisation d'une installation 10 de purification de silicium. L'installation 10 comprend une enceinte principale 12, une enceinte secondaire supérieure 13 et une enceinte secondaire inférieure 14. Des parois étanches 15 isolent l'enceinte principale 12 et les enceintes secondaires 13, 14 de l'extérieur.

Une ouverture 16 est prévue au travers des parois 15 et permet de faire communiquer l'enceinte secondaire supérieure 13 avec l'extérieur. Une ouverture 17 est prévue au travers des parois 15 et permet de faire communiquer l'enceinte secondaire supérieure 13 avec l'enceinte principale 12. Une ouverture 18 est prévue au travers des parois 15 et permet de faire communiquer l'enceinte secondaire inférieure 14 avec l'extérieur. Une ouverture 19 est prévue au travers des parois 15 et permet de faire communiquer l'enceinte secondaire inférieure 14 avec l'enceinte principale 12.

L'installation 10 comprend des portes étanches 20, 21, 22, 23 respectivement au niveau des ouvertures 16, 17, 18, 19 pour isoler hermétiquement le volume interne de l'enceinte principale 12 et/ou le volume interne de chaque enceinte secondaire 13, 14. Chaque porte 20, 21, 22, 23, par exemple du type battante ou coulissante, est actionnée par un mécanisme non représenté.

Un four de fusion du silicium 25 est disposé dans l'enceinte principale 12. Le four 25 comprend un creuset 26, par exemple en graphite, reposant sur un support non représenté, et un système de chauffage 27. Le système de chauffage 27 comprend, par exemple, une bobine entourant le creuset 26. Le creuset 26 comprend, par exemple, une base circulaire dont le diamètre peut varier de 300 à 800 mm. Le creuset 26 a, par exemple, une hauteur variant de 300 à 800 mm. Le creuset 26 comprend un système d'évacuation 28 du silicium fondu, par exemple un orifice prévu à la base du creuset 26.

Un système d'évaporation du phosphore 29 est disposé dans l'enceinte principale 12. Le système d'évaporation 29 comprend un empilement 30 de creusets 32 selon l'axe D. Les creusets 32 sont représentés schématiquement en figure 1 et seront décrits plus en détail par la suite. L'empilement de creusets 30 est maintenu sur un support 34. Le support 34 peut être en un matériau réfractaire, par exemple en un béton réfractaire associé à un empilement de matériaux assurant une bonne isolation thermique du bas de l'empilement 30 de creusets 32.

Les creusets 32 sont formés, au moins en partie, avec un matériau qui est un bon conducteur thermique. Un bon conducteur thermique est un matériau dont la conductivité thermique est supérieure ou égale à 5 W/(m*K). Les creusets 32 peuvent, en outre, être formés, au moins en partie, avec un matériau qui est un bon conducteur électrique. Un bon conducteur électrique est un matériau dont la conductivité électrique est supérieure ou égale à 1000 S/m. A titre d'exemple, les creusets 32 sont réalisés en graphite. Dans la suite de la description, le creuset situé au sommet de l'empilement 30 de creusets 32 est appelé premier creuset 36 et le creuset situé à la base de l'empilement 30 de creusets 32 est appelé dernier creuset 38. Dans le premier exemple de réalisation, les creusets 32, 36, 38 ont sensiblement la même forme. Le four de fusion du silicium 25 est situé au-dessus du premier creuset 36. Le système 28 permet le transfert du silicium liquide depuis le creuset 26 du four de fusion jusqu'au premier creuset 36. Le support 34 comprend une ouverture 39 permettant le passage du silicium fondu depuis le dernier creuset 38.

Les creusets 32, 36, 38 peuvent être à base circulaire, ovale, carrée ou rectangulaire. A titre d'exemple, les creusets ont une base rectangulaire dont le plus grand côté varie de 300 à 1000 mm, de préférence de 400 à 800 mm. La hauteur totale, mesurée selon l'axe D, de l'empilement 30 peut varier de 400 à 1000 mm, de préférence de 500 à 900 mm, par exemple d'environ 800 mm. La hauteur d'un creuset 32, 38 mesurée selon l'axe D, à l'exception éventuelle du premier creuset 36, peut varier de 50 à 300 mm, de préférence de 100 à 200 mm, par exemple d'environ 150 mm. Le système d'évaporation 29 peut comprendre un empilement 30 de 3 à 20 creusets, de préférence de 3 à 10 creusets, plus préférentiellement de 3 à 6 creusets. Chaque creuset 32, 36 comprend un conduit d'évacuation, non représenté en figure 1, débouchant sur le creuset situé en dessous dans l'empilement 30.

L'installation 10 peut comprendre un système de déplacement, non représenté, de l'empilement 30 de creusets 32 dans l'enceinte principale 12. A titre d'exemple, le système de déplacement peut correspondre à un élévateur comportant un plateau sur lequel est disposé l'empilement 30 de creusets 32 et qui est susceptible d'être déplacé dans l'enceinte principale 12 selon l'axe D par un système d'entraînement. L'élévateur peut être commandé automatiquement, par exemple par un programme de commande pré-mémorisé.

L'installation 10 comprend un système de chauffage 40 de l'empilement 30 de creusets 32, 36, 38 adapté à maintenir le silicium fondu présent dans les creusets 32, 36, 38 à la température souhaitée. Il s'agit, par exemple, d'un système de chauffage comprenant une bobine d'induction 42 entourant les parois latérales des creusets 32, 36, 38. La bobine 42 peut être creuse et comprendre une ouverture interne 44 utilisée pour refroidir la bobine 42 par la circulation d'un liquide de refroidissement. L'empilement 30 peut alors être entouré par des parois isolantes 46. En particulier, un couvercle 48 isolant recouvre le premier creuset 36. Le couvercle 48 comprend une ouverture 49 pour le passage du silicium fondu du four de fusion 25 vers le premier creuset 36. Le support 34, les parois 46 et le couvercle 48 isolants favorisent le maintien d'une température homogène dans l'empilement 30 et réduisent les pertes thermiques. Le maintien du silicium liquide à la température souhaitée dans les creusets 32, 36, 38 est obtenu par la génération de courants induits par la bobine 42 dans les creusets 32, 36, 38 et/ou dans le silicium.

A titre de variante, le chauffage de l'empilement 30 et du silicium contenu dans les creusets peut être effectué par un système de chauffage électrique comprenant des résistances, celles-ci étant disposées autour de l'empilement 30 et isolées thermiquement de l'enceinte 12 par des éléments d'isolation thermique.

L'installation 10 peut comprendre un système d'alimentation 50 du four de fusion 25 en morceaux de silicium de qualité métallurgique, par exemple sous la forme de granules. Il peut s'agir d'une trémie 50 pouvant verser les granules dans le creuset 26 du four 25 par l'ouverture 17 lorsque la porte 21 est ouverte. La trémie 50 peut comprendre un réservoir 52 et un système 54 de fourniture de morceaux de silicium alimenté par le réservoir 52. Le réservoir 52 peut être rechargé en morceaux de silicium par l'ouverture 16.

L'installation 10 comprend, en outre, un système de récupération du silicium fondu purifié fourni par le dernier creuset 38 de l'empilement 30 de creusets 32. Le système de récupération peut comprendre un récipient 58 reposant sur un chariot 60. Le chariot est mobile sur des rails 62 et peut être déplacé, par un dispositif non représenté, entre l'enceinte secondaire inférieure 14 et un système de traitement situé à l'extérieur de l'installation 10, en passant par l'ouverture 18. Le système de traitement permet de solidifier le silicium fondu pour obtenir un bloc de silicium. Lorsque le récipient 58 est dans l'enceinte secondaire inférieure 14, du silicium fondu peut être versé depuis le dernier creuset 38 dans le récipient 58. A titre de variante, le système de récupération peut comprendre plus d'un récipient 58 qui sont utilisés successivement pour recevoir le silicium fondu fourni par le dernier creuset 38. Du silicium fondu peut alors être fourni de façon continue ou quasi-continue par le dernier creuset 38.

L'installation 10 comprend au moins une pompe à vide 70 reliée à l'enceinte principale 12 par une conduite 72 et aux enceintes secondaires inférieure et supérieure 13, 14 par des conduites 73. La pompe 70 est adaptée à créer une atmosphère à basse pression, également appelée vide partiel, dans l'enceinte principale 12 et dans les enceintes secondaires supérieure et inférieure 13, 14. La pression dans l'enceinte principale 12 est par exemple inférieure à 100 Pa. Des vannes 74 peuvent fermer les conduites 73, par exemple lorsque les portes 20, 22 sont ouvertes. A titre de variante, la pompe 70 peut n'être reliée qu'à l'enceinte principale 12. L'installation 10 comprend alors, en outre, des pompes à vide supplémentaires pour créer un vide partiel dans les enceintes secondaires 13, 14.

La pompe à vide 70 est reliée à l'empilement 30 de creusets 32, 36, 38 par la conduite 72. Deux condenseurs 75, 76 sont disposés en parallèle sur la conduite 72 entre l'empilement 30 de creusets 32, 36, 38 et la pompe 70. Les éléments, notamment du phosphore mais également du silicium, qui se sont évaporés lors du passage du silicium fondu dans les creusets 32, 36, 38 sont récupérés dans les condenseurs 75, 76. Des vannes 77 situées en amont et en aval de chaque condenseur 75, 76 peuvent isoler l'un ou l'autre des condenseurs 75, 76 de façon à vider l'un ou l'autre des condenseurs 75, 76 tout en maintenant le vide dans l'enceinte principale 12. Des éléments de chauffage 78 assurent le chauffage de la conduite 72 au moins jusqu'aux condenseurs 75, 76. A titre d'exemple, la conduite 72 est en graphite, en un matériau composite de type carbone-carbone, ou en inox massif avec un revêtement céramique. Dans le premier exemple de réalisation, les condenseurs 75, 76 sont disposés à l'extérieur de l'enceinte 12. Toutefois, un ou plusieurs condenseurs peuvent être situés à l'intérieur de l'enceinte 12.

Le fonctionnement de l'installation 10 est le suivant. Pendant une opération de purification du silicium, les portes 20 et 22 sont fermées et les portes 21 et 23 sont ouvertes. Du silicium solide en morceaux est introduit dans le four de fusion 25. Le silicium fond dans le four 25 et le silicium fondu est versé du four 25 dans le premier creuset 36. Le silicium fondu circule dans chaque creuset 32, 36, 38 de l'empilement 30, du premier creuset 36 au dernier creuset 38, puis est recueilli dans le récipient 58. Dans chaque creuset 32, 36, 38, le silicium fondu forme une surface libre d'échange avec l'atmosphère à basse pression. Les creusets 32, 36, 38 sont chauffés de telle sorte que, à l'intérieur de l'empilement 30, la température soit la plus homogène possible avec des écarts de moins de 150 degrés, de préférence de moins de 50 degrés, par rapport à une température de fonctionnement qui favorise l'évaporation du phosphore. A titre d'exemple, la température de fonctionnement peut varier de 1500°C à 1800°C, de préférence de 1600°C à 1700°C. Le phosphore qui s'évapore dans chaque creuset 32, 36, 38 par la surface d'échange est aspiré par le système de pompage à travers la conduite 72, puis est condensé dans les condenseurs 75, 76. Les dimensions transversales (dans une direction perpendiculaire à D) de chaque creuset 32, 36, 38 peuvent correspondre aux dimensions transversales des creusets utilisés de façon habituelle dans les installations de fusion de silicium. Les dimensions transversales de l'empilement 30 correspondent aux dimensions transversales des creusets 32, 36, 38. Le chauffage de l'empilement 30 ne nécessite donc pas l'utilisation d'un système de chauffage ayant de grandes dimensions transversales. Comme chaque creuset 32, 36, 38 a une hauteur réduite, la hauteur totale de l'empilement 30 reste compatible avec l'utilisation de systèmes de chauffage classiques. C'est le nombre de creusets 32, 36, 38 qui permet l'obtention d'une surface totale d'échange élevée entre le silicium fondu et l'atmosphère à basse pression et qui permet de réaliser la purification souhaitée du silicium.

L'installation 10 peut fonctionner de façon continue ou quasi-continue à l'exception éventuellement des phases pendant lesquelles le réservoir 52 est rechargé et/ou le récipient 58 est vidé.

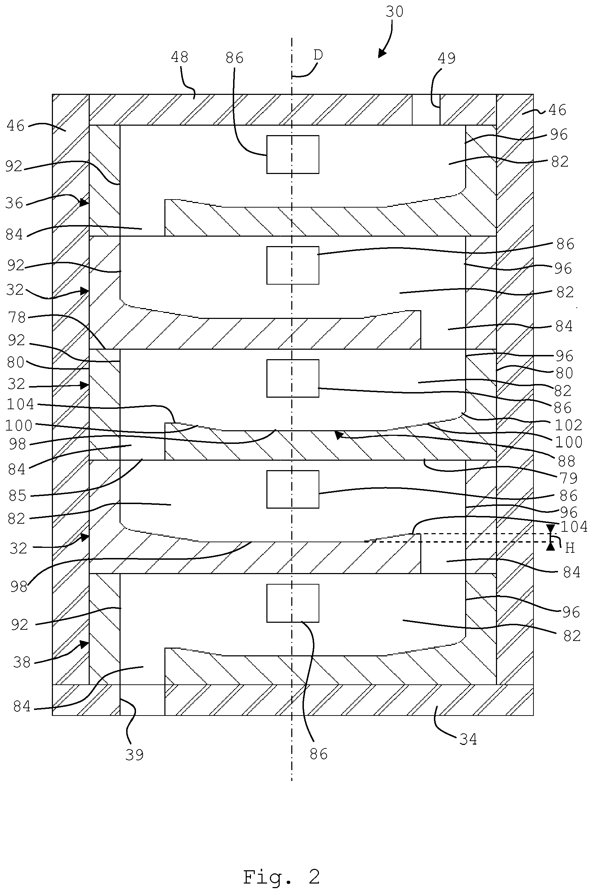

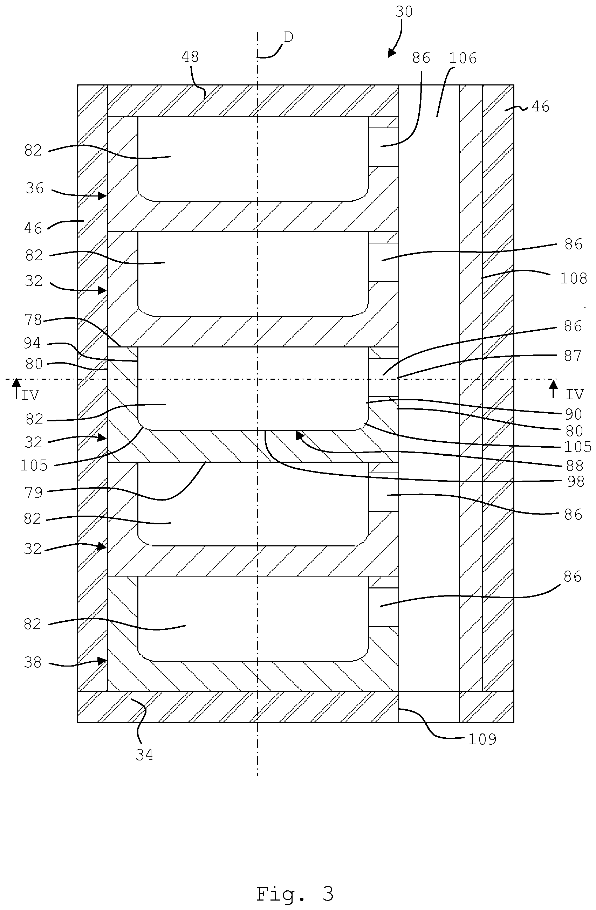

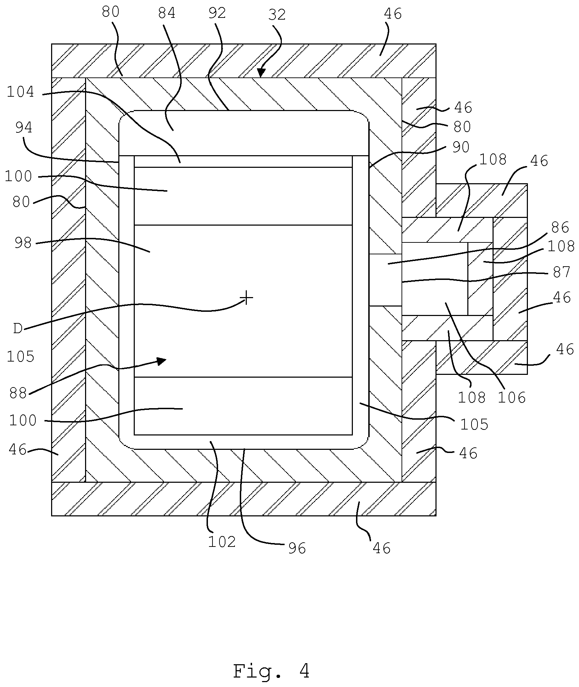

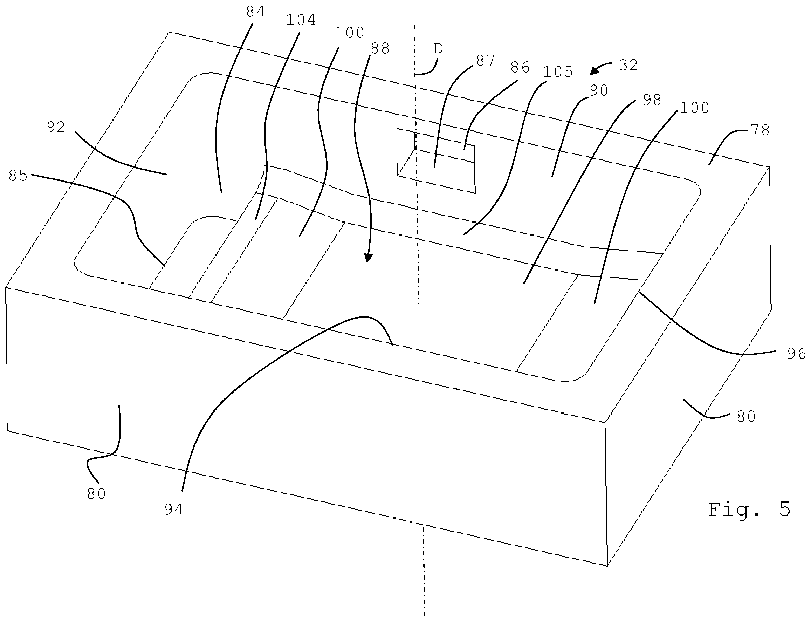

Les figures 2 et 3 sont des coupes schématiques de l'empilement 30 de creusets 32 dans deux plans perpendiculaires contenant l'axe D. La figure 4 représente une coupe d'un creuset 32 de la figure 3 selon la ligne IV-IV. La figure 5 représente une vue en perspective, partielle et schématique, d'un creuset 32.

Chaque creuset 32, 36, 38 peut être une pièce monobloc ou être constitué de plusieurs pièces assemblées les unes avec les autres. Dans le présent exemple de réalisation, chaque creuset 32, 36, 38 est à base rectangulaire et comprend une face supérieure 78, une face inférieure 79 et des faces latérales 80 reliant la face supérieure 78 à la face inférieure 79. A titre d'exemple, les faces supérieure 78 et inférieure 79 sont planes et perpendiculaires à l'axe D. La face inférieure 79 de chaque creuset 32, 36 à l'exception du dernier creuset 38 repose sur la face supérieure 78 du creuset sous-jacent. La face inférieure 79 du dernier creuset 38 repose sur le support 34. Selon une variante, les faces 78, 79 des creusets en contact peuvent être chanfreinées permettant ainsi un emboîtement simplifié des creusets 32, 36 les uns sur les autres.

Dans le présent exemple de réalisation, les creusets 32, 36, 38 ont quasiment une structure identique. Chaque creuset 32, 36, 38 comprend :
- une chambre 82 contenant le silicium fondu, ouverte sur la face supérieure 78 du creuset 32, 36, 38, la chambre 82 ayant, vue selon l'axe D, une section de forme générale rectangulaire ; et
- un conduit 84 d'évacuation du silicium fondu reliant la chambre 82 à une ouverture 85 dans la face inférieure 79.

Un revêtement, non représenté, peut recouvrir au moins en partie la chambre 82 et le conduit 84. Il peut s'agir d'un revêtement en silice ou en nitrure de silicium.

En outre, chaque creuset 32, 36, 38, comprend un conduit 86 d'évacuation des vapeurs issues du silicium fondu, reliant la chambre 82 à une ouverture 87 dans la face latérale 80.

Pour chaque creuset 32, 36 à l'exception du dernier creuset 38, le conduit 84 débouche dans la chambre 82 du creuset 32 sous-jacent.

La chambre 82 de chaque creuset 32, 36, 38 est délimitée par un fond 88 et des parois latérales 90, 92, 94 et 96 parallèles à l'axe D. La paroi latérale 90 est parallèle à la paroi latérale 94 et la paroi latérale 92 est parallèle à la paroi latérale 96. La paroi latérale 90 est perpendiculaire à la paroi latérale 92. Pour chaque creuset 32, 36, 38, le conduit 86 d'évacuation des vapeurs débouche sur la paroi latérale 90. La distance entre les parois latérales 90 et 94 peut varier de 150 à 600 mm. La distance entre les parois latérales 92 et 96 peut varier de 200 à 800 mm.

Pour chaque creuset 32, 36, 38, le conduit 84 est disposé le long de la paroi latérale 92 ou 96 et s'étend sur une partie ou sur la totalité de la paroi latérale 92 ou 96.

Les creusets 32, 36, 38 sont agencés de façon que les conduits d'évacuation 84 soient alternés. Autrement dit, le conduit d'évacuation 84 d'un creuset 32 est disposé le long de la paroi latérale 92, à gauche de l'axe D en figure 2, alors que le conduit d'évacuation 84 du creuset situé au-dessous ou au-dessus est disposé le long de la paroi latérale 96, à droite de l'axe D en figure 2.

A titre de variante, chaque creuset 32, 36, 38 peut comprendre une paroi supérieure recouvrant partiellement la chambre 82 et comprenant un orifice dans lequel débouche le conduit 84 du creuset 32 situé au-dessus.

Le fond 88 de chaque creuset 32, 36, 38 comprend une portion plane 98 perpendiculaire à l'axe D ayant, vue selon l'axe D, la forme d'un rectangle et se prolongeant à deux extrémités opposés par des portions de raccord 100 planes et inclinées vers le haut de quelques degrés par rapport à la portion plane 98. A titre d'exemple, les portions de raccord 100 sont inclinées d'un angle inférieur ou égal à 20°, de préférence inférieur ou égal à 10°, plus préférentiellement inférieur ou égal à 5°, par rapport à la portion plane 98. La distance entre la portion plane 98 et la face inférieure 79 peut varier de 15 à 50 mm. Cette épaisseur peut varier en fonction de la quantité de silicium dans les creusets afin de garantir une bonne tenue mécanique de l'ensemble de creusets.

Pour chaque creuset 32, 36, 38, l'une des portions inclinées 100 est reliée à la paroi latérale 92 ou 96 par une portion arrondie 102 et l'autre portion inclinée 100 se prolonge par une portion plane 104 perpendiculaire à l'axe D ayant, vue selon l'axe D, la forme d'un rectangle et débouchant sur le conduit 84. La portion plane 98, les portions inclinées 100 et la portion plane 104 sont reliées aux parois latérales 90, 94 par des portions arrondies 105. A titre de variante, la portion plane 98 peut être reliée aux parois latérales 90, 94 par des portions de raccord, planes et inclinées vers le haut de quelques degrés par rapport à la portion plane 98. La distance H, mesurée selon l'axe D, séparant les portions planes 98 et 104 est inférieure ou égale à 40 mm. Un bec de coulée, non représenté, peut relier la chambre 82 au conduit 84. Le bec de coulée peut être prévu par exemple au niveau de la paroi plane 104.

Lorsque du silicium fondu est versé dans un creuset 32, 36, 38, le silicium fondu remplit la chambre 82 jusqu'à ce que le niveau du silicium dépasse le niveau de la portion plane 104. Le silicium fondu déborde alors par le conduit 84.

Le conduit d'évacuation 86 de vapeur de chaque creuset 32, 36, 38 communique avec une cheminée 106 d'axe parallèle à l'axe D et reliée, à son extrémité supérieure, à la conduite 72, non représentée sur la figure 3. Les parois 108 de la cheminée 106 sont en un matériau qui est un bon conducteur thermique. Dans le cas où le système de chauffage est à induction, les parois 108 de la cheminée 106 peuvent, en outre, être en un matériau bon conducteur électrique. A titre de variante, la cheminée 106 peut être disposée au centre des creusets 32, 36, 38, en prévoyant, dans chaque creuset 32, 36, 38, un rebord central pour éviter l'écoulement de silicium fondu dans la cheminée 106.

Le support 34 peut comprendre une ouverture 109 dans le prolongement de la cheminée 106. Un système de fourniture d'un gaz neutre ou d'un mélange de gaz neutres, par exemple de l'argon ou de l'hélium, non représenté, peut être relié à l'ouverture 109. Pendant certaines phases de fonctionnement de l'installation 10, il peut être avantageux de prévoir un écoulement de gaz neutre dans la cheminée 106, notamment pour effectuer un balayage des parois du four et de la conduite 72.

A titre d'exemple, en fonctionnement, la température dans les chambres 82, les conduits 84 et 86 et la cheminée 106 peut varier de 1500°C à 1800°C, de préférence de 1600°C à 1700°C.

Un exemple de procédé de purification du silicium utilisant l'installation 10 comprend l'alimentation du four de fusion 25 en morceaux de silicium. Le silicium fondu s'écoule du four de fusion 25 dans le premier creuset 36. Le niveau du silicium fondu dans le premier creuset 36 s'élève jusqu'à ce que du silicium fondu déborde de la chambre 82 dans le conduit 84 pour couler jusqu'au creuset 32 situé en dessous. Ce phénomène se reproduit jusqu'à ce que le silicium fondu s'écoule de la chambre 82 du dernier creuset 38 vers le récipient 58 qui récupère le silicium fondu. Le silicium fondu recueilli dans le récipient 58 peut être refroidi et solidifié selon un procédé connu pour former un bloc de silicium.

En fonctionnement, le silicium remplit chaque creuset 32, 36, 38 jusqu'à la hauteur H. Par la surface d'échange entre le silicium fondu et l'atmosphère à basse pression, du phosphore s'évapore. La pompe à vide 70 crée une aspiration dans la cheminée 106. Le phosphore est alors guidé dans la conduite 72 jusqu'aux condenseurs 75, 76. La hauteur de chaque creuset 32, 36, 38 est adaptée aux dimensions prévues pour le conduit 86 de façon à obtenir une évacuation convenable des vapeurs issues du silicium fondu par les conduits 86. Du silicium peut s'évaporer et être récupéré par les condenseurs 75, 76. En raison de la disposition alternée des conduits d'évacuation 84, le silicium fondu doit traverser en totalité toutes les chambres 82 des creusets 32, 36, 38. La surface libre d'échange entre le silicium fondu et l'atmosphère environnante de l'installation 10 correspond au produit de la surface d'échange entre le silicium fondu de chaque creuset 32, 36, 38 et du nombre de creusets 32, 36, 38. La durée de transit du silicium fondu depuis le premier creuset 36 jusqu'au dernier creuset 38 peut être supérieure à 60 minutes, ce qui permet à une quantité suffisante de phosphore de s'évaporer. La durée de transit du silicium liquide dans l'empilement 30 de creusets 32, 36, 38 dépend de plusieurs paramètres, et notamment :
- du nombre de creusets 32, 36, 38 ;
- de la quantité de silicium liquide dans chaque creuset 32, 36, 38 ; et
- de la vitesse d'alimentation de l'empilement 30 de creusets en silicium.

Le rapport entre la racine carrée de la surface libre du silicium fondu dans chaque chambre 82 et la hauteur du silicium fondu dans la chambre 82 est supérieur ou égal à 5, de préférence supérieur ou égal à 8. En fonctionnement, la durée de transit peut être facilement augmentée en réduisant la vitesse d'alimentation en silicium liquide du premier creuset 36.

Lorsque l'installation 10 est arrêtée, le silicium fondu dans les creusets 32, 36, 38 peut se solidifier. La masse volumique du silicium solide est inférieure à la masse volumique du silicium liquide de sorte que le volume du silicium augmente lorsqu'il se solidifie. Les parois légèrement inclinées 100 permettent l'expansion du silicium tout en évitant l'apparition de contraintes trop élevées dans le creuset 32, 36, 38. Un système de vidange peut être prévu pour améliorer l'évacuation du silicium fondu lorsque l'installation 10 est arrêtée. Le système de vidange peut comprendre un orifice de vidange, non représenté, reliant la portion plane 98 de chaque creuset 32, 36, 38 à la face inférieure 79. Lorsque l'installation de purification 10 est en fonctionnement, l'écoulement de silicium liquide par l'orifice de vidange est faible par rapport au débit dans les conduits d'évacuation 84. Lorsque l'installation 10 est arrêtée et avant la solidification du silicium, le silicium fondu s'écoule par les orifices de vidange, de creuset 32 en creuset 32 jusqu'au dernier creuset 38 et de là au système de récupération.

L'installation de purification 10 présente l'avantage que le système de chauffage 27 du four de fusion 25 et le système de chauffage 40 de l'empilement 30 de creusets 32 peuvent être commandés séparément. De ce fait, le système de chauffage 27 peut être commandé pour chauffer le creuset 26 à une température adaptée pour la fonte du silicium tandis que le système de chauffage 40 peut être commandé pour chauffer les creusets 32, 36, 38 de façon à maintenir le silicium fondu dans les creusets 32, 36, 38 à une température adaptée à favoriser l'évaporation du phosphore.

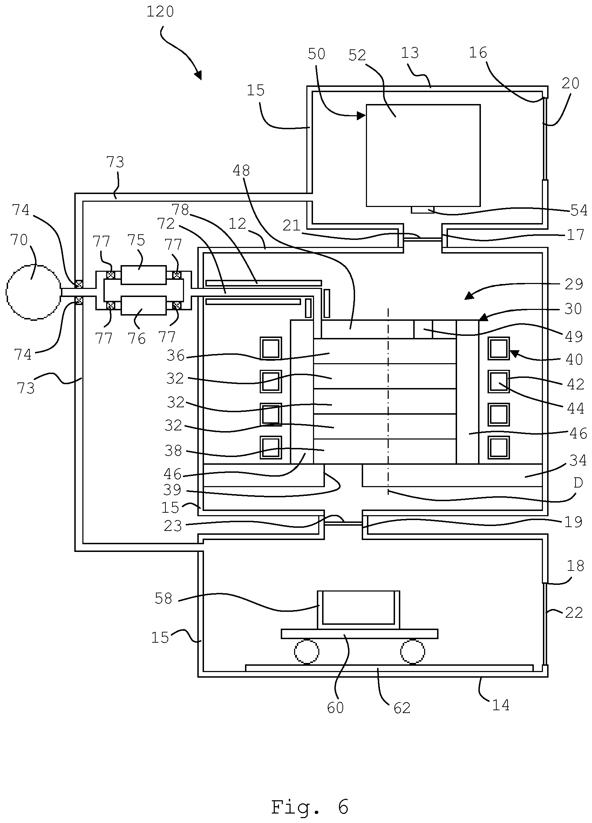

La figure 6 représente un second exemple de réalisation d'une installation 120 de purification de silicium. L'installation 120 a une structure analogue à l'installation 10 mais ne comprend pas le four de fusion 25. Dans le second exemple de réalisation, la fusion du silicium solide est réalisée par le premier creuset 36 qui peut avoir une structure différente de celle des autres creusets 32, 38. Les morceaux de silicium solide sont alors versés directement de la trémie 50 dans le premier creuset 36 par l'ouverture 17 (la porte 21 étant ouverte) et par l'ouverture 49 du couvercle 48.

Le fonctionnement de l'installation 120 est identique au fonctionnement de l'installation 10 à la différence que le silicium est fondu dans le premier creuset 36.

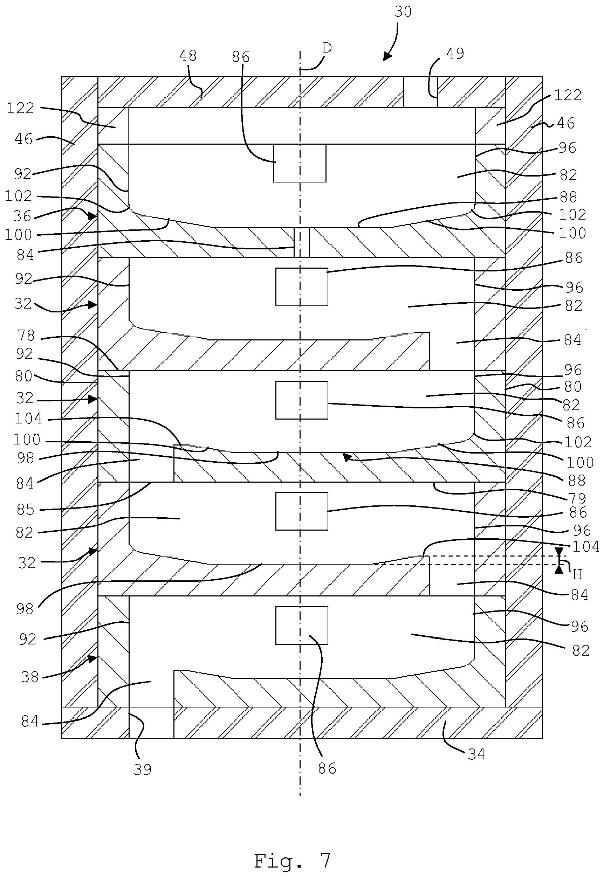

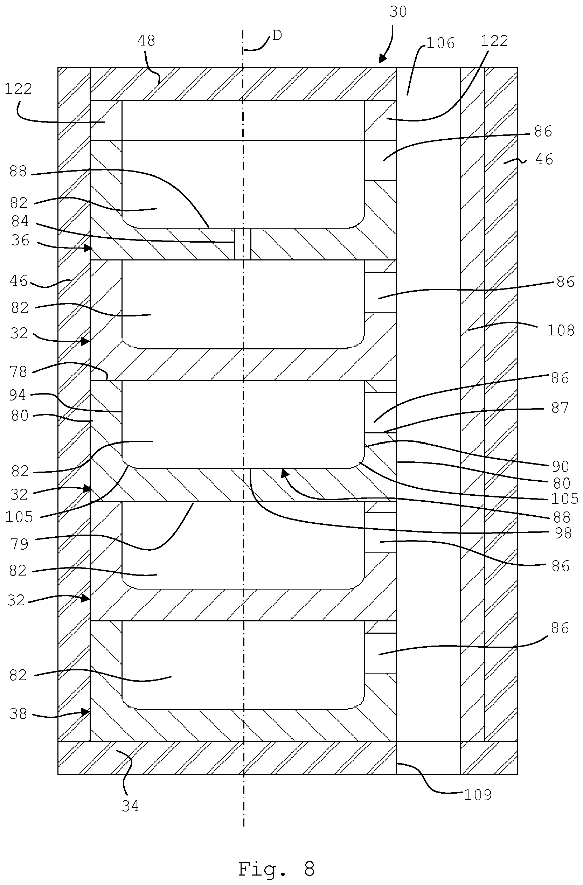

Les figures 7 et 8 sont des coupes schématiques de l'empilement 30 de creusets 32 de l'installation 120 dans deux plans perpendiculaires contenant l'axe D.

Le premier creuset 36 a une structure qui diffère de la structure des autres creusets 32, 38 sur certains points. Par rapport aux autres creusets 32, 38, le conduit 84 du premier creuset 36 correspond à un orifice cylindrique d'axe D débouchant en partie centrale du fond 88 de la chambre 82 du premier creuset 36. En outre, les portions inclinées 100 sont reliées aux parois latérales 92, 96 par des portions arrondies 102.

Un système de rehaussement 122, correspondant, par exemple, à un anneau d'axe D, est prévu sur le premier creuset 36 pour augmenter le volume de la chambre 82 du premier creuset 36. Plusieurs anneaux 122 peuvent être empilés.

Un exemple de procédé de purification du silicium utilisant l'installation 120 comprend l'alimentation du premier creuset 36 en morceaux de silicium de qualité métallurgique qui fondent alors dans le premier creuset 36. Le silicium fondu s'écoule du premier creuset 36 par le conduit 84 dans le creuset 32 situé en dessous. Le niveau du silicium fondu dans le creuset 32 s'élève jusqu'à ce que du silicium fondu déborde de la chambre 82 dans le conduit 84 pour couler jusqu'au creuset situé en dessous. Ce phénomène se reproduit jusqu'à ce que le silicium fondu s'écoule de la chambre du dernier creuset 38 vers le récipient 58 qui récupère le silicium fondu.

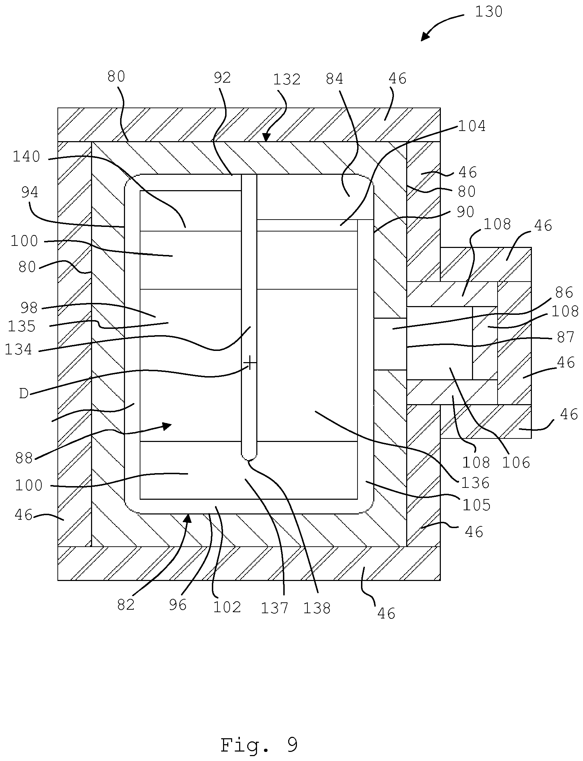

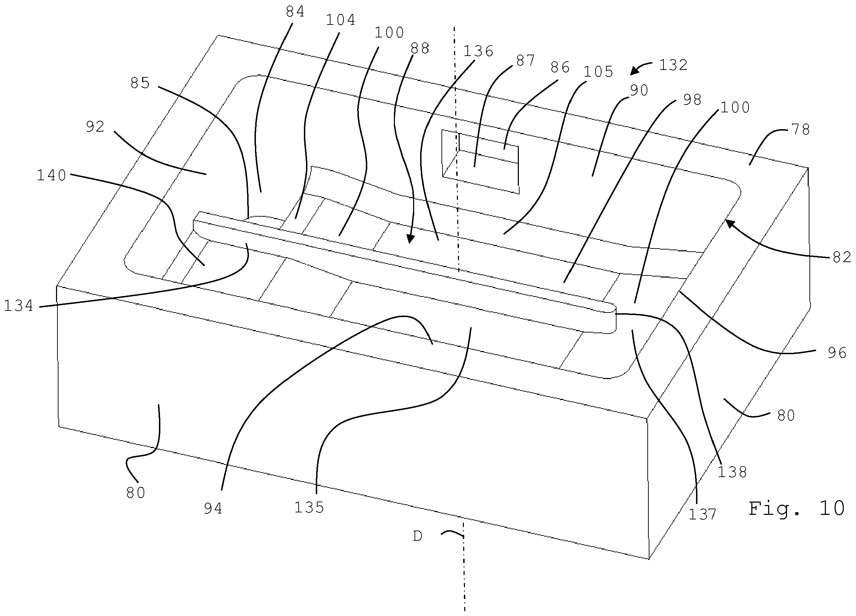

Les figures 9 et 10 sont des vues analogues respectivement aux figures 4 et 5 d'un troisième exemple de réalisation d'une installation 130 de purification de silicium. L'installation 130 peut avoir la même structure que les installations 10 ou 120 à la différence que les creusets 32 sont remplacés par les creusets 132. Chaque creuset 132 comprend une cloison 134 qui divise la chambre 82 en deux demi-chambres 135, 136. La cloison 134 peut s'étendre sur toute la hauteur de la chambre 82 ou seulement sur une partie de la hauteur de la chambre 82 comme cela est représenté aux figures 9 et 10. La cloison 134 s'étend depuis la paroi latérale 92 jusqu'à une partie de la portion de raccord 100. La cloison 134 ne s'étend pas jusqu'à la paroi latérale 96. Un passage 137 est donc délimité entre la paroi latérale 96 et l'extrémité 138 de la cloison 134. Le conduit d'évacuation 84 est disposé le long de la paroi latérale 92 seulement entre la cloison 134 et la paroi latérale 90. Une paroi plane 140 est prévue entre la cloison 134 et la paroi latérale 94 de sorte qu'il n'y ait pas de conduit d'évacuation entre la barrière 134 et la paroi latérale 94.

L'installation 130 comprend deux types de creusets 132. Le premier type de creuset 132 correspond à celui représenté sur les figures 9 et 10. Le deuxième type de creuset, non représenté, correspond au symétrique du creuset 132 représenté aux figures 9 et 10 par rapport à un plan comprenant l'axe D et perpendiculaire à la paroi 92, c'est-à-dire que le conduit d'évacuation 84 est situé entre la cloison 134 et la paroi latérale 94 et ne s'étend pas entre la cloison 134 et la paroi latérale 90.

Les creusets 132 sont agencés de façon que les parois latérales 92 de chaque creuset soient dans le prolongement les unes des autres et que les positions des conduits d'évacuation 84 par rapport à la barrière 134 soient alternées. Autrement dit, le conduit d'évacuation 84 d'un creuset est disposé le long de la paroi latérale 90 alors que le conduit d'évacuation 84 du creuset 132 adjacent et situé au-dessous ou au-dessus est disposé le long de la paroi latérale 94. Les conduits d'évacuation 84 sont donc tous disposés du même côté de l'empilement de creusets 132.

Lorsque du silicium fondu est versé dans un creuset 132, le silicium fondu remplit la chambre 82 en contournant la cloison 134 jusqu'à ce que le niveau du silicium dépasse le niveau de la portion plane 104. Le silicium fondu déborde alors par le conduit 84 et tombe sur la paroi plane 140 du creuset 132 situé au-dessous.

Par rapport à un creuset qui permettrait d'obtenir une surface libre de silicium fondu identique mais qui serait constitué d'un creuset unique à base circulaire ou rectangulaire, la présente invention permet d'améliorer le rendement énergétique d'au moins 20 %. En effet, l'empilement 30 conserve des dimensions caractéristiques horizontales du même ordre de grandeur que la hauteur de l'empilement. L'empilement 30 est donc plus facile à chauffer et à isoler thermiquement qu'un creuset unique permettant d'obtenir une surface libre de silicium fondu identique. Le rapport entre la dimension transversale maximale (perpendiculaire à l'axe d'empilement D) et la hauteur de l'empilement 30 peut varier de 0,2 à 2, de préférence de 0,3 à 1.

Des systèmes de brassage du silicium fondu peuvent être prévus dans chaque creuset 32, 36, 38. Le brassage peut être réalisé au moins en partie par induction lorsque le système de chauffage est à induction. La fréquence du courant alimentant la bobine d'induction peut alors être adaptée pour favoriser un brassage du silicium fondu.

A titre de variante, la paroi de fond 88 d'un creuset peut être une paroi plane inclinée par rapport à l'horizontale et dont l'extrémité inférieure débouche dans le conduit d'évacuation. Des chicanes sont alors disposées sur la paroi pour ralentir la progression du silicium fondu et en favoriser le brassage.

Dans les exemples de réalisation décrits précédemment, les creusets 32, 36, 38 sont parfaitement empilés selon l'axe D. Toutefois, les creusets 32, 36, 38 peuvent être disposés autrement. A titre d'exemple, les creusets peuvent être au moins partiellement décalés les uns par rapport aux autres, par exemple selon une configuration en zigzag, en escalier, en colimaçon, etc, chaque creuset recouvrant au moins partiellement le creuset situé en dessous. Chaque creuset recouvre au moins 75 %, de préférence au moins 80 %, plus préférentiellement au moins 90 %, en particulier 100 %, du creuset adjacent situé en dessous.

En outre, dans les exemples de réalisation décrits précédemment, l'évacuation des vapeurs issues du silicium fondu est réalisée par aspiration par la cheminée 106 reliée à la pompe à vide 70 par la conduite 72. A titre de variante, pour améliorer l'évacuation des vapeurs issue du silicium fondu, une seconde cheminée peut être prévue, parallèle à la cheminée 106 et diamétralement opposée à la cheminée 106 par rapport à l'axe D. La cheminée supplémentaire peut communiquer avec la chambre 82 de chaque creuset 32, 36, 38 par un conduit. Un système de fourniture d'un gaz neutre ou d'un mélange de gaz neutres, par exemple de l'argon ou de l'hélium, peut être relié à l'extrémité inférieure de la cheminée supplémentaire. Pendant l'opération de purification, du gaz neutre peut être fourni dans la cheminée supplémentaire. En raison de l'aspiration de la pompe à vide 70, un écoulement gazeux tend alors à se créer dans la chambre 82 de chaque creuset 32, 36, 38 de la conduite communiquant avec la cheminée supplémentaire à la conduite communiquant avec la cheminée 106, puis jusqu'aux condenseurs 75, 76, favorisant l'entraînement des vapeurs issues du silicium fondu.

La présente invention a été décrite dans le cadre de la fabrication de silicium destinée aux applications photovoltaïques. Il est clair qu'elle s'applique également à tout type de matériau nécessitant une surface libre élevée pour son traitement en phase liquide.

Divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Installation (10 ; 120) de purification d'un matériau, comprenant une enceinte (12) contenant une atmosphère à une pression inférieure ou égale à 100 Pa et contenant :
- un ensemble (30) de creusets (32, 36, 38 ; 132) au moins en partie empilés selon une direction d'empilement (D), chaque creuset comportant une chambre (82) destinée à contenir le matériau à l'état fondu et un conduit d'évacuation (84) du matériau à l'état fondu hors de la chambre, l'ensemble comportant au moins des premier, deuxième et troisième creusets, le premier creuset étant au moins en partie à l'aplomb du deuxième creuset et étant en contact avec le deuxième creuset, le conduit d'évacuation du premier creuset débouchant dans le deuxième creuset, et le deuxième creuset étant au moins en partie à l'aplomb du troisième creuset et étant en contact avec le troisième creuset, le conduit d'évacuation du deuxième creuset débouchant dans le troisième creuset, le premier creuset recouvrant au moins 75 % du deuxième creuset et le deuxième creuset recouvrant au moins 75 % du troisième creuset ;
- un système de chauffage (40) entourant au moins en partie chaque creuset ;
- un système (58) de récupération du matériau à l'état fondu fourni par le conduit d'évacuation de l'un des creusets dudit ensemble ;
- une cheminée (106) attenante à l'ensemble de creusets, chaque creuset comprenant une conduite (86) par l'intermédiaire de laquelle la chambre du creuset communique avec la cheminée ;
- une pompe à vide (70) reliée à la cheminée.

2. Installation de purification selon la revendication 1, dans laquelle la chambre (82) de chaque creuset (32, 36, 38 ; 132) est conformée pour que le rapport entre la racine carrée de la surface libre du matériau à l'état fondu dans la chambre et la hauteur du matériau à l'état fondu dans la chambre soit supérieur ou égal à cinq.

3. Installation de purification selon la revendication 1 ou 2, comprenant un système (50) de fourniture du matériau, à l'état solide ou à l'état fondu, à l'un des creusets (36) dudit ensemble (30).

4. Installation de purification selon l'une quelconque des revendications 1 à 3, dans laquelle le conduit d'évacuation du deuxième creuset (32) est disposé de façon opposée aux conduits d'évacuation des premier et troisième creusets par rapport à la direction d'empilement (D).

5. Installation de purification selon l'une quelconque des revendications 1 à 4, dans laquelle chaque creuset (132) comprend une cloison (134) divisant la chambre (82) en au moins des première et deuxième demi-chambres (135, 136) communicantes, et dans laquelle le conduit d'évacuation (84) du premier creuset débouche dans la première demi-chambre du deuxième creuset et le conduit d'évacuation (84) du deuxième creuset débouche dans la deuxième demi-chambre du troisième creuset.

6. Installation de purification selon l'une quelconque des revendications 1 à 5, dans laquelle la chambre (82) de chaque creuset (32, 36, 38 ; 132) comprend un fond (98), et dans laquelle le conduit d'évacuation (84) comprend une ouverture dans la chambre, le rapport entre la racine carrée de la section de la chambre dans un plan horizontal affleurant l'ouverture et la hauteur entre le fond et l'ouverture selon la direction verticale est supérieur ou égal à cinq.

7. Installation de purification selon l'une quelconque des revendications 1 à 6, dans laquelle l'ensemble (30) de creusets (32, 38 ; 132) comprend un quatrième creuset, le troisième creuset étant au moins en partie à l'aplomb du quatrième creuset, le conduit d'évacuation (84) du troisième creuset débouchant dans le quatrième creuset.

8. Installation de purification selon l'une quelconque des revendications 1 à 7, dans laquelle, pour chaque creuset (32, 36, 38 ; 132), la chambre (82) comprend au moins deux faces opposées (92, 96) et dans laquelle, pour chaque creuset (32, 36, 38 ; 132), le conduit d'évacuation (84) comprend une ouverture traversante le long de l'une des faces.

9. Installation de purification selon la revendication 8, dans laquelle, pour chaque creuset (32, 36, 38 ; 132), la chambre (82) comprend un fond (88) ayant une première portion plane horizontale (98) se prolongeant, à deux extrémités opposées, par des deuxièmes portions planes (100) inclinées par rapport à la première portion plane d'un angle inférieur ou égal à 20 degrés.

10. Installation de purification selon la revendication 9, dans laquelle l'une des deuxièmes portions planes (100) se prolonge par une troisième portion plane horizontale (104), l'ouverture s'étendant le long de la troisième portion plane.

11. Installation de purification selon l'une quelconque des revendications 1 à 10, dans laquelle le système de chauffage (40) est inductif ou résistif.

12. Installation de purification selon l'une quelconque des revendications 1 à 11, dans laquelle l'enceinte (12) comprend un four (25) de fusion du matériau adapté à fournir le matériau à l'état fondu à l'ensemble (30) de creusets (32, 36, 38 ; 132).

13. Procédé de purification d'un matériau comprenant au moins une impureté, utilisant une installation de purification (10 ; 120) selon l'une quelconque des revendications 1 à 12, comprenant les étapes suivantes :
- verser le matériau à l'état fondu dans le premier creuset ;
- chauffer chaque creuset (32, 36, 38 ; 132) de façon que, à l'intérieur de l'empilement (30), la température varie de moins de 150 degrés par rapport à une température de fonctionnement ;
- amener le matériau à l'état fondu à s'écouler du premier creuset dans le deuxième creuset et du deuxième creuset dans le troisième creuset d'où il résulte une évaporation de l'impureté ; et
- récupérer le matériau à l'état fondu issu du troisième creuset.

14. Procédé de purification selon la revendication 13, dans lequel le matériau est le silicium, et dans lequel la température de fonctionnement varie de 1500°C à 1800°C.

## Patentansprüche

1. Anlage (10; 120) zum Reinigen eines Materials, die eine Umhüllung (12) aufweist, die eine Atmosphäre bei einem Druck von weniger als oder gleich 100 Pa aufweist und Folgendes enthält:
- eine Anordnung (30) von Tiegeln (32, 36, 38; 132) wenigstens teilweise entlang einer Stapelrichtung (D) gestapelt, wobei jeder Tiegel eine Kammer (82), die dazu bestimmt ist, das Material im geschmolzenen Zustand aufzunehmen, und eine Leitung (84) zum Auslassen des Materials im geschmolzenen Zustand aus der Kammer aufweist, wobei die Anordnung wenigstens erste, zweite und dritte Tiegel aufweist, wobei der erste Tiegel wenigstens teilweise direkt über dem zweiten Tiegel angeordnet ist und mit dem zweiten Tiegel in Kontakt steht, wobei die Auslassleitung des ersten Tiegels in den zweiten Tiegel mündet und der zweite Tiegel wenigstens teilweise direkt über dem dritten Tiegel liegt und mit dem dritten Tiegel in Kontakt steht, wobei die Auslassleitung des zweiten Tiegels in den dritten Tiegel mündet, wobei der erste Tiegel wenigstens 75% des zweiten Tiegels abdeckt und der zweite Tiegel wenigstens 75% des dritten Tiegels abdeckt;
- ein Heizsystem (40), das jeden Tiegel wenigstens teilweise umgibt;
- ein System (58) zur Rückgewinnung des Materials im geschmolzenen Zustand, das durch die Auslassleitung eines der Tiegel der Anordnung bereitgestellt wird;
- einen Schornstein (106), der an die Anordnung von Tiegeln angrenzt, wobei jeder Tiegel eine Leitung (86) aufweist, durch die die Kammer des Tiegels mit dem Schornstein in Verbindung steht;
- eine Vakuumpumpe (70), die mit dem Schornstein verbunden ist.

2. Reinigungsvorrichtung nach Anspruch 1, wobei die Kammer (82) jedes Tiegels (32, 36, 38; 132) eine solche Form aufweist, dass das Verhältnis der Quadratwurzel der freien Oberfläche des geschmolzenen Siliziums in der Kammer zur Höhe des Materials im geschmolzenen Zustand in der Kammer größer oder gleich fünf ist.

3. Reinigungsvorrichtung nach Anspruch 1 oder 2, die ein System (50) zur Versorgung eines der Tiegel (36) der Anordnung (30) mit dem Material im festen Zustand oder im geschmolzenen Zustand aufweist.

4. Reinigungsvorrichtung nach einem der Ansprüche 1 bis 3, wobei die Auslassleitung des zweiten Tiegels (32) gegenüber den Auslassleitungen des ersten und dritten Tiegels in Bezug auf die Stapelrichtung (D) angeordnet ist.

5. Reinigungsvorrichtung nach einem der Ansprüche 1 bis 4, wobei jeder Tiegel (132) eine Trennwand (134) aufweist, die die Kammer (82) in wenigstens erste und zweite miteinander verbundene Halbkammern (135, 136) unterteilt, und wobei die Auslassleitung (84) des ersten Tiegels in die erste Halbkammer des zweiten Tiegels mündet und die Auslassleitung (84) des zweiten Tiegels in die zweite Halbkammer des dritten Tiegels mündet.

6. Reinigungsvorrichtung nach einem der Ansprüche 1 bis 5, wobei die Kammer (82) jedes Tiegels (32, 36, 38; 132) einen Boden (98) aufweist, und wobei die Auslassleitung (84) eine Öffnung in der Kammer aufweist, wobei das Verhältnis der Quadratwurzel des Kammerquerschnitts in einer horizontalen Ebene mit der Öffnung zur Höhe zwischen dem Boden und der Öffnung entlang der vertikalen Richtung größer oder gleich fünf ist.

7. Reinigungsvorrichtung nach einem der Ansprüche 1 bis 6, wobei die Anordnung (30) von Tiegeln (32, 38; 132) einen vierten Tiegel aufweist, wobei der dritte Tiegel wenigstens teilweise direkt über dem vierten Tiegel angeordnet ist, wobei die Auslassleitung (84) des dritten Tiegels in den vierten Tiegel mündet.

8. Reinigungsvorrichtung nach einem der Ansprüche 1 bis 7, wobei die Kammer (82) für jeden Tiegel (32, 36, 38; 132) wenigstens zwei gegenüberliegende Oberflächen (92, 96) aufweist und wobei für jeden Tiegel (32, 36, 38; 132) die Auslassleitung (84) eine Durchgangsöffnung entlang einer ihrer Oberflächen aufweist.

9. Reinigungsvorrichtung nach Anspruch 8, wobei die Kammer (82) für jeden Tiegel (32, 36, 38; 132) einen Boden (88) mit einem ersten planaren horizontalen Abschnitt (98) aufweist, der sich an zwei gegenüberliegenden Enden in zweiten planaren Abschnitten (100) erstreckt, die in Bezug auf den ersten planaren Abschnitt um einen Winkel kleiner oder gleich 20 Grad geneigt sind.

10. Reinigungsvorrichtung nach Anspruch 9, wobei sich einer der zweiten planaren Abschnitte (100) in einem dritten horizontalen planaren Abschnitt (104) erstreckt, wobei sich die Öffnung entlang des dritten planaren Abschnitts erstreckt.

11. Reinigungsvorrichtung nach einem der Ansprüche 1 bis 10, wobei das Heizsystem (40) induktiv oder resistiv ist.

12. Reinigungsvorrichtung nach einem der Ansprüche 1 bis 11, wobei die Umhüllung (12) einen Ofen (25) zum Schmelzen des Materials aufweist, das das Material im geschmolzenen Zustand an die Anordnung (30) von Tiegeln (32, 36, 38; 132) abgeben kann.

13. Verfahren zum Reinigen eines Materials, das wenigstens eine Verunreinigung aufweist, unter Verwendung der Reinigungsvorrichtung (10; 120) nach einem der Ansprüche 1 bis 12, das die folgenden Schritte aufweist:
- Gießen des Materials im geschmolzenen Zustand in den ersten Tiegel;
- Erwärmen jedes Tiegels (32, 36, 38; 132), so dass innerhalb des Stapels (30) die Temperatur um weniger als 150 Grad in Bezug auf eine Betriebstemperatur variiert;
- wobei das Material im geschmolzenen Zustand aus dem ersten Tiegel in den zweiten Tiegel und aus dem zweiten Tiegel in den dritten Tiegel fließt, wobei die Verunreinigung verdunstet; und
- Rückgewinnung des Materials im geschmolzenen Zustand aus dem dritten Tiegel.

14. Reinigungsverfahren nach Anspruch 13, wobei das Material Silizium ist und wobei die Betriebstemperatur von 1.500°C bis 1.800°C variiert.

## Claims

1. A facility (10; 120) for purifying a material, comprising an enclosure (12) containing an atmosphere at a pressure lower than or equal to 100 Pa and containing:
- an assembly (30) of crucibles (32, 36, 38; 132) at least partly stacked along a stacking direction (D), each crucible comprising a chamber (82) intended to contain the material in the molten state and a conduit (84) for discharging the material in the molten state out of the chamber, the assembly comprising at least first, second, and third crucibles, the first crucible being at least partly directly above the second crucible and being in contact with the second crucible, the discharge conduit of the first crucible emerging into the second crucible, and the second crucible being at least partly directly above the third crucible and being in contact with the third crucible, the discharge conduit of the second crucible emerging into the third crucible, the first crucible covering at least 75% of the second crucible and the second crucible covering at least 75% of the third crucible;
- a heating system (40) at least partly surrounding each crucible;
- a system (58) for recovering the material in the molten state provided by the discharge conduit of one of the crucibles of said assembly;
- a chimney (106) adjoining the assembly of crucibles, each crucible comprising a conduit (86) through which the chamber of the crucible communicates with the chimney;
- a vacuum pump (70) connected to the chimney.

2. The purification facility of claim 1, wherein the chamber (82) of each crucible (32, 36, 38; 132) has such a shape that the ratio of the square root of the free surface area of the molten silicon in the chamber to the height of the material in the molten state in the chamber is greater than or equal to five.

3. The purification facility of claim 1 or 2, comprising a system (50) for supplying one of the crucibles (36) of said assembly (30) with the material, in the solid state or in the molten state.

4. The purification facility of any of claims 1 to 3, wherein the discharge conduit of the second crucible (32) is arranged opposite to the discharge conduits of the first and third crucibles with respect to the stacking direction (D).

5. The purification facility of any of claims 1 to 4, wherein each crucible (132) comprises a partition (134) dividing the chamber (82) into at least first and second communicating half-chambers (135, 136), and wherein the discharge conduit (84) of the first crucible emerges into the first half-chamber of the second crucible and the discharge conduit (84) of the second crucible emerges into the second half-chamber of the third crucible.

6. The purification facility of any of claims 1 to 5, wherein the chamber (82) of each crucible (32, 36, 38; 132) comprises a bottom (98), and wherein the discharge conduit (84) comprises an opening in the chamber, the ratio of the square root of chamber cross-section in a horizontal plane level with the opening to the height between the bottom and the opening along the vertical direction is greater than or equal to five.

7. The purification facility of any of claim 1 to 6, wherein the assembly (30) of crucibles (32, 38; 132) comprises a fourth crucible, the third crucible being at least partly directly above the fourth crucible, the discharge conduit (84) of the third crucible emerging into the fourth crucible.

8. The purification facility of any of claims 1 to 7, wherein, for each crucible (32, 36, 38; 132), the chamber (82) comprises at least two opposite surfaces (92, 96) and wherein, for each crucible (32, 36, 38; 132), the discharge conduit (84) comprises a through opening along one of its surfaces.

9. The purification facility of claim 8, wherein, for each crucible (32, 36, 38; 132), the chamber (82) comprises a bottom (88) having a first planar horizontal portion (98) extending, at two opposite ends, in second planar portions (100) inclined with respect to the first planar portion by an angle smaller than or equal to 20 degrees.

10. The purification facility of claim 9, wherein one of the second planar portions (100) extends in a third horizontal planar portion (104), the opening extending along the third planar portion.

11. The purification facility of any of claims 1 to 10, wherein the heating system (40) is inductive or resistive.

12. The purification facility of any of claims 1 to 11, wherein the enclosure (12) comprises a furnace (25) for melting the material capable of delivering the material in the molten state to the assembly (30) of crucibles (32, 36, 38; 132).

13. A method of purifying a material comprising at least one impurity, using the purification facility (10; 120) of any of claims 1 to 12, comprising the steps of:
- pouring the material in the molten state into the first crucible;
- heating each crucible (32, 36, 38; 132) so that, within the stack (30), the temperature varies by less than 150 degrees with respect to an operating temperature;
- having the material in the molten state flow from the first crucible into the second crucible and from the second crucible into the third crucible, whereby the impurity evaporates; and
- recovering the material in the molten state from the third crucible.

14. The purification method of claim 13, wherein the material is silicon and wherein the operating temperature varies from 1,500°C to 1,800°C.
